(19) Europäisches Patentamt
European Patent Office
Office européen des brevets

(11) **EP 3 413 221 A1**

(12) **EUROPEAN PATENT APPLICATION**
published in accordance with Art. 153(4) EPC

(43) Date of publication:
**12.12.2018 Bulletin 2018/50**

(51) Int Cl.:
**G06F 19/00** (2018.01)   **G06Q 40/00** (2012.01)

(21) Application number: **17746812.1**

(86) International application number:
**PCT/CN2017/071920**

(22) Date of filing: **20.01.2017**

(87) International publication number:
**WO 2017/133492 (10.08.2017 Gazette 2017/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.02.2016 CN 201610070616**

(71) Applicant: **Tencent Technology (Shenzhen)
Company Limited
Shenzhen, Guangdong 518057 (CN)**

(72) Inventor: **LIU, Jiang
Shenzhen,
Guangdong 518057, (CN)**

(74) Representative: **Eisenführ Speiser
Patentanwälte Rechtsanwälte PartGmbB
Postfach 31 02 60
80102 München (DE)**

(54) **RISK ASSESSMENT METHOD AND SYSTEM**

(57)    A risk assessment method and system. The invention mines a weak variable having value and adds the same to a risk assessment model, enabling risk assessment factors to be more comprehensive, explanatory and stable, and thereby increasing the accuracy and ensuring the objectivity of risk assessment. The method comprises: performing grouping of variables from a data source to obtain at least one first-type variable group and at least one second-type variable group (110); constructing a risk assessment model with respect to the at least one second-type variable group to obtain a model result of the risk assessment model of the at least one second-type variable group (120); using the model result of the at least one second-type variable group as a variable for merging with a variable of the at least one first-type variable group to form a third-type variable group; and constructing an integrated risk assessment model with respect to the third-type variable group (130).

Perform variable grouping according to data sources, to obtain at least one first-type variable group and at least one second-type variable group — 110

Construct a risk assessment model for the at least one second-type variable group, to obtain a model result of the risk assessment model for the at least one second-type variable group — 120

Use the model result of the at least one second-type variable group as a variable, and combine the variable with a variable in the at least one first-type variable group, to form a third-type variable group; and construct a comprehensive risk assessment model for the third-type variable group — 130

**FIG. 1**

**Description**

This application claims the priority to Chinese Patent Application No. 201610070616.5, titled "RISK ASSESSMENT METHOD AND SYSTEM" filed with the Chinese State Intellectual Property Office on February 1, 2016, which is incorporated herein by reference in its entirety.

**FIELD OF THE TECHNOLOGY**

The present disclosure relates to the field of risk assessment technologies based on computer technologies, and specifically, to a risk assessment method and system.

**BACKGROUND OF THE DISCLOSURE**

Risk assessment is assessment on the possibility of risks brought by, for example, threats faced by, weaknesses of, and impact caused by the information. There are two common risk assessment methods: a model method and an expert method.

The model method is a method for constructing a risk assessment model using a machine learning method such as logistic regression, a decision tree, and a random forest, and performing risk assessment based on a model result. The practice shows that some weak variables may be quite significant in services. However, in the model method, the weak variables cannot be selected for a model. Consequently, in the model method, functions of some variables cannot be reflected, and it is difficult to reflect the future trend of service development.

The expert method is a method for performing risk assessment by determining considerations of the assessment according to opinions of an expert. The expert method can resolve the problem that the weak variables cannot be selected for the model. However, the expert method is a relatively subjective method, in which the value of data is not fully dug and used.

**SUMMARY**

Embodiments of the present invention provide a risk assessment method. Valuable weak variables are dug and added to a risk assessment model, making considerations of risk assessment more comprehensive and the interpretability and stability stronger, helping improve the accuracy of risk assessment, and ensuring the objectiveness of risk assessment.

A first aspect of the present disclosure provides a risk assessment method, including: performing variable grouping according to data sources, to obtain at least one first-type variable group and at least one second-type variable group; constructing a risk assessment model for the at least one second-type variable group, to obtain a model result of the risk assessment model for the at least one second-type variable group; using the model result of the at least one second-type variable group as a variable, and combining the variable with a variable in the at least one first-type variable group, to form a third-type variable group; and constructing a comprehensive risk assessment model for the third-type variable group.

A second aspect of the present disclosure provides a risk assessment system, including: a preprocessing module, configured to perform variable grouping according to data sources, to obtain at least one first-type variable group and at least one second-type variable group; a first construction module, configured to construct a risk assessment model for the at least one second-type variable group, to obtain a model result of the risk assessment model for the at least one second-type variable group; a variable combination module, configured to: use the model result of the at least one second-type variable group as a variable, and combine the variable with a variable in the at least one first-type variable group, to form a third-type variable group; and a second construction module, configured to construct a comprehensive risk assessment model for the third-type variable group.

It can be learned from the above that in some feasible implementations of the present disclosure, a technical solution is used in which variables are grouped to obtain two types of variable groups, a risk assessment model is constructed for a second-type variable group, a model result is used as a variable to be combined with a variable in a first-type variable group, to form a third-type variable group, and finally, a comprehensive risk assessment model is constructed for the third-type variable group.

The method fully digs and uses the data value of the second-type variable group, so that the second-type variable group is reflected in a finally constructed comprehensive model. Therefore, considerations of risk assessment are more comprehensive, the interpretability and the model stability are stronger, and the model result is as objective and accurate as possible and is more robust in application, thereby helping improve the effect of risk assessment and helping reflect the future trend of service development.

**BRIEF DESCRIPTION OF THE DRAWINGS**

To describe the technical solutions of the embodiments of the present invention more clearly, the following briefly introduces the accompanying drawings required for describing the embodiments. Apparently, the accompanying drawings in the following descriptions show only some embodiments of the present invention, and a person of ordinary skill in the art may still derive other drawings from these accompanying drawings without creative efforts.

FIG. 1 is a schematic flowchart of a risk assessment method according to an embodiment of the present invention;

FIG. 2 is a schematic diagram of a process of constructing a model by using a conventional model method;

FIG. 3 is a schematic diagram of a process of constructing a model by using the risk assessment method in the embodiment of the present invention;

FIG. 4 is a schematic structural diagram of a risk assessment system according to an embodiment of the present invention; and

FIG. 5 is a schematic structural diagram of a computer device according to an embodiment of the present invention.

**DESCRIPTION OF EMBODIMENTS**

To make the solutions of the present disclosure more comprehensible for a person skilled in the art, the following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative effects shall fall within the protection scope of the present disclosure.

The technical solutions in the embodiments of the present invention relate to a risk assessment method based on a computer system. The following first briefly describes some terms used in the risk assessment method.

Throughout this specification, the term "risk scorecard" refers to a risk assessment model, for example, a risk assessment model used for assessing credit risks of users, and usually includes two types: supervised learning and semi-supervised learning (if reject inference exists). Usually, a supervised target (that is, a target variable) is that whether a user defaults in a period of time, for example, if the user does not pay back loans in time, whether the loans are more than 90 days overdue within six months after the loans are issued. Usually, there are two methods for constructing a risk scorecard: a model method and an expert method.

The term "weak variable" refers to a variable that is statistically insignificant, that is, a probability (P-Value, Pr) in a significance hypothesis test is greater than or equal to a set standard, for example, 0.05, and that cannot be selected for a risk assessment model according to such a statistics standard. Comparatively, the term "strong variable" refers to a variable that is statistically significant, that is, a P-value in a significance hypothesis test is less than a set standard, for example, 0.05, and that can meet a significance statistics standard. It should be noted that the set standard may alternatively be a value different from 0.05, for example, 0.01. This is not limited in this specification. It should be noted that the hypothesis test is an important element in inferential statistics. When the hypothesis test is performed by using professional statistics software, the P-value is a basis for test decision. The P-value is a probability, and reflects a possibility that an event happens. In statistics, usually, a P-value obtained by using a significance test method may indicate a significant variable when $P < 0.05$, which means that a probability of a difference between samples caused by a sampling error is less than 0.05.

The term "variable group" refers to a group of variables from a same data source. The term "strong variable group" refers to a variable group having a relatively high correlation with a target variable and/or having a relatively high correlation with user information. The term "weak variable group" refers to a variable group having a relatively low correlation with a target variable and/or having a relatively low correlation with user information. The correlation may be represented by using a correlation coefficient such as a P-value. An average value of P-values of all variables in a variable group may be calculated. When the average value is greater than a threshold, it is considered that the variable group has a relatively high correlation with the target variable; when the average value is not greater than the threshold, it is considered that the variable group has a relatively low correlation with the target variable.

The term "expert scorecard" refers to a risk scorecard designed based on the industry expert experience. An expert scoring method is a risk assessment method performed based on the expert scorecard.

The term "logistic regression (LR)" refers to a method that is maturely and widely applied at present and that is used for developing a risk scorecard, and is a generalized linear regression method.

The term "decision tree" refers to a method for approximating a value of a discrete function. The decision tree is a typical classification method, and may also be used for constructing a prediction model. First, data is processed, and a readable rule and decision tree are generated by using an inductive algorithm. Then, the decision tree is used for analyzing new data. Substantially, the decision tree is a process of classifying data according to a series of rules. Typical algorithms of the decision tree include ID3, C4.5, a classification and regression tree (CART), and the like.

The term "analytic hierarchy process" refers to a decision method of determining an element that is always related to a decision as a target, criterion, solution, or the like in a hierarchy, and performing qualitative and quantitative analysis based on the hierarchy.

The term "variable normalization" refers to an operation of standardizing a variable, an objective of which is to make a variable having different dimensions comparable. There are different normalization methods. In this specification, a minimum-maximum normalization method may be used, and a value range of each processed variable is [0,1].

The term "model robustness" refers to stability of a model from a development process to an implementation process. A model having higher robustness has a more ideal implementation effect.

The term "Kolmogorov Smirnov (KS)" refers to a common metric for measuring an effect of a score model. Kolmogorov and Smirnov are names of two Soviet mathematicians. KS is in a range of 0 to 100, and a larger value indicates a better model effect. Usually, KS being equal to approximately 25 is a risk assessment criterion acceptable by financial institutions.

The following briefly describes the model method.

The model method is a most common risk assessment method. A risk assessment model (a logic model) constructed by using the model method may be referred to as a risk scorecard. There are many conventional methods for constructing a risk scorecard, for example, a logistic regression method, a decision tree, and a random forest. The logistic/stepwise regression method is one of most widely and maturely applied methods at present. The following uses the logistic regression method as an example to describe a basic modeling process of the risk scorecard. The process includes the following steps:

First, a normalized modeling wide table, for example, Table 1, is prepared. Usually, there are more than hundreds of variables x in Table 1. It is assumed that there are totally 10000 user samples and 300 attributes (that is, variables) in Table 1. Table 1 includes a total of three types of variables from different data sources: payment variables, instant messaging variables, and socialization variables. Assuming that the three types of variables each include 100 variables, there are a total of 300 variables. Y in the second column in Table 1 is a supervised target or a target variable, which may specifically refer to that if a user does not pay back loans in time, whether the loans are more than 90 days overdue within one year after the loans are issued. A value of each variable in the table is a normalized value. Therefore, each value is in a range of [0,1].

It should be noted that each variable in the embodiments of the present invention is from a legal data source, for example, including user data or data that may be queried for by the public. The user data is data that is authenticated by users for use.

Table 1 Modeling wide table

| User number | Target variable | Variable 1 | ... | Variable 15 | Variable 16 | ... | Variable 30 | ... | Variable 300 |
|---|---|---|---|---|---|---|---|---|---|
| obs | target(y) | x1 | ... | x15 | x16 | ... | x30 | ... | x300 |
| 1 | 1 | 0 | ... | 0 | 1 | ... | 0.8 | ... | 0.50 |
| 2 | 0 | 1 | ... | 0.12 | 0 | ... | 0.2 | ... | 0.45 |
| 3 | 0 | 1 | ... | 0.27 | 1 | ... | 0.1 | ... | 0.31 |
| 4 | 0 | 0 | ... | 0.87 | 0 | ... | 0.3 | ... | 0.12 |
| ... | ... | ... | ... | ... | ... | ... | ... | ... | |
| 10000 | 1 | 1 | ... | 0.35 | 0 | ... | 0.9 | ... | 0.53 |

It is easily understood that among the three types of variables, payment variables are directly correlated and have a relatively high correlation with finance, and may be considered as a strong variable group; instant messaging variables and socialization variables each have a relatively low correlation with finance and may be considered as a weak variable group.

It is assumed that in Table 1, the first to the fifteenth variables are strong variables in the strong variable group, and the sixteenth to the thirtieth variables are strong variables in the weak variable group. After a series of variable analysis and variable screening, a normal result may be that the first 15 strong variables in the strong variable group and the sixteenth to the eighteenth strong variables in the weak variable group enter a final logistic regression model.

A result of the obtained logistic regression model is shown in formulas (1) and (2):

$$Logodds = f(x) = a_0 + \sum_{i=1}^{18} a_i x_i \quad (1)$$

$$Probability = \frac{\exp(Logodds_{15})}{(1 + \exp(Logodds_{15}))} \quad (2)$$

*Logodds* being an output result of the logistic regression model (model result for short), Pr*obability* being a probability parameter, and Pr*obability* representing a probability that the model result *Logodds* is impaired.

It can be learned that in the weak variable group, only 3 variables including x16, x17, and x18 are selected for the model, and the remaining variables do not enter the model. Although other strong variables (for example, x19 to x30) in the weak variable group can be placed into the model by lowering a select in/out screening criterion or by using a force in method, contributions of the weak variable group to the model cannot be effectively reflected, or a weight of the weak variable group in the risk scorecard is excessively low. Such an approach further has a significant disadvantage: variables in the weak variable group that are newly selected by lowering the criterion may be very unstable.

The following briefly describes the expert method.

An expert scorecard is a logistic score model designed and formed based on the industry expert experience. The expert scorecard is very useful at an initial stage of the service development, and is also frequently used in some public services relating to a relatively small number of users. For a conventional expert scorecard, opinions of experts are collected in advance, considerations, that is, ranges of used variables, for scoring are determined, and then a weight of each variable is determined, so as to finally obtain an expert scorecard required for a service. Data and variable assumption are the same as those in Table 1 in the model method. The expert scorecard is shown in Table 2.

Table 2 Expert scorecard

| Variable / Expert Weight | Variable 1 | ... | Variable 15 | Variable 16 | ... | Variable 30 | Total |
|---|---|---|---|---|---|---|---|
| expert | x1 | ... | x15 | x16 | ... | x30 | total |
| 1 | 20 | ... | 10 | 5 | ... | 1 | 100 |
| 2 | 15 | ... | 8 | 5 | ... | 2 | 100 |
| 3 | 10 | ... | 11 | 6 | ... | 2 | 100 |
| 4 | 30 | ... | 6 | 4 | ... | 2 | 100 |
| 5 | 25 | ... | 7 | 2 | ... | 1 | 100 |
| Average weight | 20 | ... | 8 | 4 | ... | 2 | 100 |

The expert scorecard resolves a problem that most variables in the weak variable group cannot be selected for the model in the model method, and is relatively easy to understand and implement. However, the expert scorecard has a fatal defect: The value of data is not fully dug and used, having relatively strong subjectivity. For example, the method does not consider correlations and synergies among the variables, and a variable value may vary relatively greatly, causing a model to be not very stable.

As described above, the existing risk scorecard construction methods mainly include the expert method and the model method. Both of the two methods are relatively mature in industry application, but their defects are also very obvious. The main defect of the model method is that a weak variable cannot be selected, and a service development trend cannot be reflected. The main defect of the expert method is that the method has relatively strong subjectivity and cannot dig and use the value of data to the greatest extent.

Therefore, the embodiments of the present invention provide a risk assessment method and system. The following provides descriptions separately.

Embodiment 1

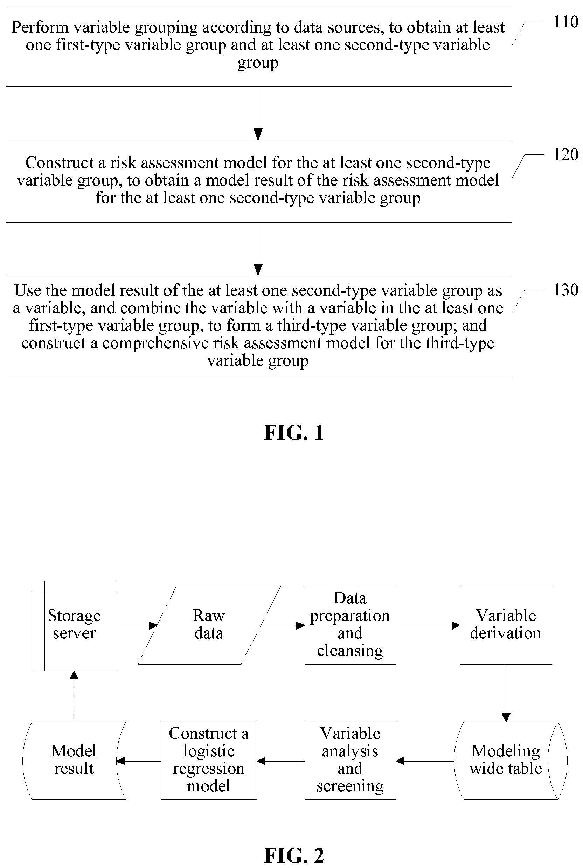

Referring to FIG. 1, the first embodiment of the present invention provides a risk assessment method. The method may include the following steps:
S110: Perform variable grouping according to data sources, to obtain at least one first-type variable group and at least one second-type variable group.

With the rapid development of the Internet, there are increasingly more information and data, and data sources used in the risk assessment method are increasingly more widely distributed. Some data sources are relatively strongly correlated with a credit risk, and some data sources are relatively weakly correlated with the credit risk. In this specification, first, variables are grouped according to the data sources, and variables that are from a same source are considered as one variable group. For example, three types of variables respectively from payment, instant messaging, and socialization may be considered as three variable groups. In this specification, variable groups are classified, and all of the variable groups are classified into a strong variable group and a weak variable group. Some variables such as financial management, saving, consumption, and payment of users are directly correlated with user information such as funds, and have relatively strong correlations with credit risks of the users. For example, these variables may be referred to as the strong variable group. Some variables such as instant messaging, socialization, and gaming are not directly correlated with finance, only reflect some social and behavior habits of users, and therefore have relatively weak correlations with credit risks. For example, these variables may be referred to as the weak variable group.

Factors of classifying the variable groups may include, but are not limited to, the following:

1. Correlations between the data sources and a target variable (for example, whether there is a default)

Usually, a Pearson correlation coefficient may be used in correlation analysis, and a calculation method thereof is not described herein. Usually, a correlation criterion may be: a value above 0.6 indicates a strong correlation, 0.4 to 0.6 indicates a medium correlation, 0.2 to 0.4 indicates a weak correlation, and a value below 0.2 indicates an extremely weak correlation or no correlation. However, a criterion for actual application in the financial circle is far from that, and the correlation criterion is much lower, because a variable whose correlation coefficient is above 0.4 is extremely rare. That is, the correlation criterion may be defined according to a requirement. For example, for a payment variable, it may be defined that a value above 0.1 indicates a strong correlation, and a value below 0.1 indicates a weak correlation.

2. Correlations between the data sources and user information (for example, funds)

Correlations are also quite related to variable types. Usually, correlations of variables such as loans, financing, and payment that are relatively close to information such as user funds is relatively strong; correlations of variables such as instant messaging or socialization that is relatively far from the user funds is relatively weak. During application, an importance value may be used for representing the correlations between the data sources and the user information, for example, strong, medium, and weak.

In this specification, the variable groups may be classified into the strong variable group and the weak variable group according to the foregoing two criteria, that is, the correlations between the data sources and the target variable and/or the correlations between the data sources and the user information. The strong variable group is the first-type variable group, and the weak variable group is the second-type variable group.

In some embodiments, a specific method for classifying the variable groups may include the following steps:

a0: Group all variables into a plurality of variable groups according to different data sources.

a1: Calculate a correlation coefficient of any variable and a target variable according to correlations between the data sources and the target variable, and calculate an average correlation coefficient of each variable group in the plurality of variable groups. The correlation coefficient is the P-value described above.

a2: Determine an importance value of each variable group in the plurality of variable groups according to correlations between the data sources and user information.

a3: Perform variable group classification according to the average correlation coefficients and/or the importance values of the plurality of variable groups, classify a variable group whose average correlation coefficient is greater than a threshold and/or whose importance value is the highest as a first-type variable group, that is, a strong variable group, and classify other variable groups as second-type variable groups, that is, weak variable groups.

It can be learned that the strong variable group is a variable group having a relatively high correlation with the target variable and/or having a relatively high correlation with the user information, and the weak variable group is a variable group having a relatively low correlation with the target variable and/or having a relatively low correlation with the user information.

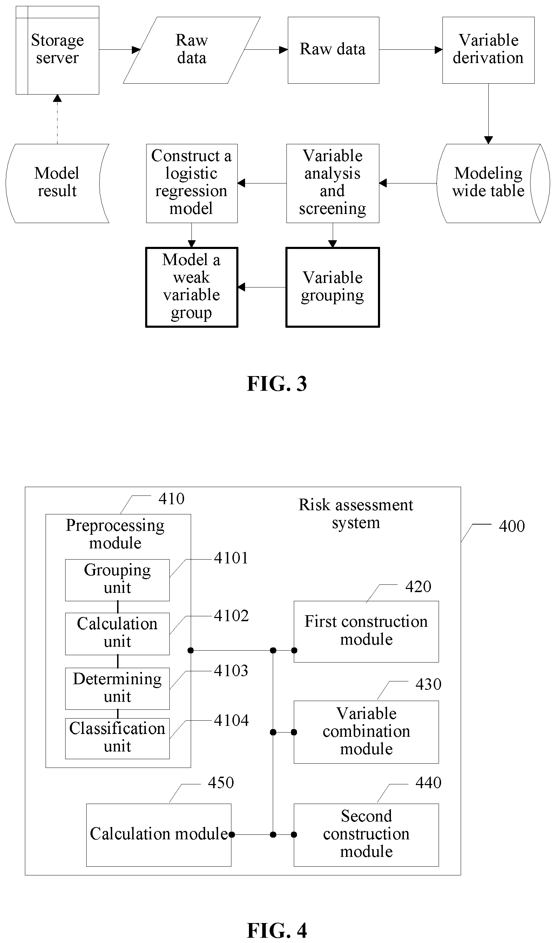

As shown in FIG. 3, FIG. 3 is a schematic diagram of variable group classification in an example of an application scenario. Correlation criteria for various types of variables are also different. Correlation criterion thresholds set in combination with practical experience may be: 0.1 for a payment variable, 0.05 for an instant messaging variable, and 0.06 for a socialization variable. A variable whose correlation is greater than the threshold is considered as a strong variable, and a variable whose correlation is less than the threshold is considered as a weak variable. Among payment variables, relatively strong variables include credit card payment reflecting a payment capability of a user, a fund size reflecting a payment capability of a user, and the like, and relatively weak variables include a user transaction frequency, a phone card recharge of a user, and the like. Among instant messaging variables, relatively strong variables include the number of commonly-used login cities reflecting user stability and the like, and relatively weak variables include the number of pieces of sent and received information and the like. Among socialization variables, relatively strong variables include the number of and the quality of relatively close friends, and relatively weak variables include the number of friends, the amount of sent and received information, and the like.

For convenience of description, variable names of the three types of variables are corresponding to those in Table 1. Specifically, refer to the third row and the fourth row in Table 3. According to the correlation criterion thresholds of the variables described above, the numbers of strong variables and weak variables in each type of variables are respectively: 15 and 85 for payment variables, 8 and 92 for instant messaging variables, and 7 and 93 for socialization variables.

Table 3 Variable grouping

| Variable type | Payment (A) | | Instant messaging (B) | | Socialization (C) | |
|---|---|---|---|---|---|---|
| Correlation | Relatively strong | Relatively weak | Relatively strong | Relatively weak | Relatively strong | Relatively weak |
| Variable | xA1-xA15 | xA16-xA100 | xB1-xB10 | xB11-xB100 | xC1-xC10 | xC11-xC100 |
| Variable name | x1-x15 | x31-x115 | x16-x23 | x116-x207 | x24-x30 | x208-x300 |
| Number of variables | 15 | 85 | 8 | 92 | 7 | 93 |
| Correlation coefficient | $\geq 0.1$ | $<0.1$ | $\geq 0.05$ | $<0.05$ | $\geq 0.06$ | $<0.06$ |
| Average correlation coefficient | 0.12 | | 0.03 | | 0.02 | |
| Importance value | Strong | | Weak | | Weak | |
| Variable grouping | Weak variable group | | Weak variable group | | Weak variable group | |

It can be learned from Table 3 that three types of variables from payment, instant messaging, and socialization may be classified into three groups according to different data sources, that is, variable groups A, B, and C. An average correlation coefficient and an importance value of the variable group A are the largest. Therefore, the variable group A is a strong variable group, and the variable group B and C are weak variable groups.

It should be noted that the weak variable groups are different from weak variables. A weak variable group may also include a strong variable, but a correlation with a target variable is merely not very strong. Similarly, a strong variable group may also include a weak variable. Certainly, a weak variable is more easily included in a weak variable group, and a strong variable is more easily included in a strong variable group. Although many variables in a weak variable group are significant in statistics, when they are placed together with a strong variable group for modeling, usually, only a small part of them can enter the model. The effect of the weak variable group is greatly diluted, and the weak variable group cannot play a due role.

S120: Construct a risk assessment model for the at least one second-type variable group, to obtain a model result of the risk assessment model for the second-type variable group.

In this step, a risk assessment model is established for each of the at least one second-type variable group, or the weak variable group, obtained in the foregoing step, to obtain a model result of the risk assessment model for each weak variable group. It is assumed that each weak variable group is modeled by using a logistic regression method. Considering the weak variable group, a variable selection criterion may be properly relaxed.

For example, a modeling result of the weak variable group B corresponding to instant messaging is as follows:

$$Logodds_B = f(x_B) = a_0 + \sum_{i=1}^{8} a_i x_{Bi} \qquad (3)$$

In the formula (3), $Logodds_B$ is a model result, $f(x_B)$ represents modeling of the variable group B, $x_{Bi}$ represents the $i^{th}$ variable in the variable group B, i is a positive integer, $\alpha_0$ is an intercept term/a constant term, and $\alpha_i$ represents a weight of the variable $x_{Bi}$.

Considering a correspondence between variable names in Table 3, the formula (3) may be written as:

$$Logodds_B = f(x_B) = a_0 + \sum_{i=16}^{23} a_i x_i \qquad (4)$$

In the formula (4), $Logodds_B$ is a model result, $f(x_B)$ represents modeling of the variable group B, $\alpha_0$ is an intercept term/a constant term, $\alpha_i$ represents a weight of a variable $x_i$, and i is a positive integer.

Similarly, a modeling result of the weak variable group C corresponding to socialization may be obtained:

$$Logodds_C = f(x_C) = a_0 + \sum_{i=1}^{7} a_i x_{Ci} \qquad (5)$$

In the formula (5), $Logodds_C$ is a model result, $f(x_C)$ represents modeling of the variable group C, $x_{Ci}$ represents the $i^{th}$ variable in the variable group C, i is a positive integer, $a_0$ is an intercept term/a constant term, and $a_i$ represents a weight of the variable $x_{Ci}$.

Considering the correspondence between the variable names in Table 3, the formula (5) may be written as:

$$Logodds_C = f(x_C) = a_0 + \sum_{i=24}^{30} a_i x_i \qquad (6)$$

In the formula (6), $Logodds_C$ is a model result, $f(x_C)$ represents modeling of the variable group C, $a_0$ is an intercept term/a constant term, $a_i$ represents a weight of a variable $x_i$, and i is a positive integer.

It should be noted that risk assessment models represented by the foregoing formulas are merely examples, and are not intended to limit the present disclosure. In addition, when there are a plurality of second-type variable groups, a risk assessment model may be established for only one of the second-type variable groups, or a risk assessment model may be established for several or each of the second-type variable groups. Both of them can have a corresponding technical effect, and the present disclosure imposes no limit thereon.

S130: Use the model result of the second-type variable group as a variable, and combine the variable with a variable in the at least one first-type variable group, to form a third-type variable group; and construct a comprehensive risk assessment model for the third-type variable group.

For example, in this step, a model result of each weak variable group is used as a variable, and all variables in all strong variable groups are combined with all model result variables, to form a third-type variable group. In this specification, the third-type variable group is also referred to as a combination variable group. It is assumed that a model result of a risk assessment model for any weak variable group $X_j$ in the at least one weak variable group is denoted as

*Logodds$_j$*, *Logodds$_j$* is used as a variable, and any variable in the at least one strong variable group is denoted as $x_i$. All variables *Logodds$_j$* and $x_i$ may be combined to form a combination variable group, both i and j being positive integers. The combination variable group may be represented by $[x_1, x_2......x_i......x_n......Logodds_j......Logodds_m]$, n being the number of variables $x_i$, m being the number of variables *Logodds$_j$*, and both n and m being positive integers.

In this step, a comprehensive risk assessment model is constructed for the combination variable group:

$$Logodds = a_0 + \sum_{i=1}^{n} a_i x_i + \sum_{j=1}^{m} a_j Logodds_j \qquad (7)$$

$a_0$ being an intercept term/a constant term, $a_i$ representing a weight of the variable $x_i$, and $a_j$ being a weight of the variable *Logodds$_j$*.

Assuming that there are two variables *Logodds$_j$*, that is, *Logodds$_B$* and *Logodds$_C$* obtained in the foregoing step, the comprehensive model represented by the formula (7) may be written as:

$$Logodds = f(x_A, x_B, x_C) = f(x_A, Logodds_B, Logodds_C)$$
$$= a_0 + \sum_{i=1}^{15} a_i x_i + a_{16} Logodds_B + a_{17} Logodds_C \qquad (8)$$

Further, a probability parameter Pr*obability* may be calculated based on a model result *Logodds* of the foregoing comprehensive model, and a formula is as follows:

$$\Pr obability = \exp(Logodds) \Big/ (1 + \exp(Logodds)) \qquad (9)$$

exp ( ) being an exponential function using a natural constant e as a base, and Pr*obability* representing a probability that the model result is impaired. Assuming that Pr*obability* is equal to 0.1 through calculation, it indicates that a probability that the model result is impaired is 10%.

It can be learned from the foregoing that according to the technical solution in this embodiment of the present invention, a problem in the existing technology is resolved methodologically:

(1) First, the variables are grouped and classified according to the data sources, the correlations between the data sources and the target variable (for example, the financial risk), and the correlations between the data sources and the user information (for example, the funds information), to obtain the strong variable group and the weak variable group, for example, one strong variable group and two weak variable groups.

(2) The weak variable groups are modeled separately, for example, two models are constructed for the two weak variable groups.

(3) Modeling results of the two weak variable groups are used as two variables, which are placed together with a variable in the strong variable group, to construct a final comprehensive risk assessment model.

According to this method, a relatively large number of variables in the weak variable groups may enter the model, ensuring contributions of the weak variable groups. In addition, the model has stronger interpretability in services, and has stronger robustness in practical application.

It should be noted that in this embodiment of the present invention, it is not necessarily that a risk assessment model is established for each second-type variable group and that each model structure is used as a variable to be combined with a variable in the first-type variable group. Alternatively, risk assessment models may be established for some second-type variable groups (for example, when there are three second-type variable groups, risk assessment models are established for only two of them), and variables in the some second-type variable groups are combined with some variables in the first-type variable group. A person skilled in the art shall make no restrictive interpretation thereon.

For better understanding of the technical solution of this embodiment of the present invention, the following describes an entire modeling process of a risk scorecard with reference to the accompanying drawings. As shown in FIG. 2, FIG. 2 shows a process of constructing a model by using a conventional model method such as a logistic regression method. As shown in FIG. 3, FIG. 3 shows a process of constructing a model by using the risk assessment method in this embodiment of the present invention. It can be learned from FIG. 2 and FIG. 3 that, two processes of "variable grouping" and "modeling a weak variable group" are added to the modeling process in this embodiment of the present invention.

In practice, the inventor of the present disclosure tests and compares results of three methods which are a logistic regression method, an expert scorecard method, and the method in the present disclosure. Comparison results are shown in Table 4.

Table 4 Comparison between test results

| Method | | Logistic regression method | Expert scorecard | Method for modeling a weak variable group |
|---|---|---|---|---|
| Selected variable | | 18 | 30 | 30 |
| Model development effect (KS) | Development sample | 32 | 25 | 33 |
| | Test sample | 30 | 24 | 31 |
| | Inter-temporal test | 31 | 24 | 32 |
| Model implementation effect (KS) | | 26 | 22 | 27 |

KS is one of the most frequently used metrics for measuring a model. The effect of a model during implementation is a final criterion for assessing the model. Table 4 shows that both the model training effect and the implementation effect of the method in this embodiment of the present invention are slightly better than those of the logistic regression method, and much better than those of the expert scorecard.

It can be understood that the foregoing solution in this embodiment of the present invention may be specifically implemented in, for example, a computer device.

It can be learned from the foregoing that in some feasible implementations of the present disclosure, the risk assessment method is provided. The solution is used in which the variables are grouped and classified, to obtain the strong variable group and the weak variable group; the risk assessment model is constructed for each obtained weak variable group; the model result of each weak variable group is used as a variable to be combined with the obtained strong variable group, to form the combination variable group; and finally, the comprehensive risk assessment model is constructed for the combination variable group. The following technical effects are obtained:

The method fully digs and uses the data value of a weak variable group, and each variable in each weak variable group may be reflected in a finally constructed comprehensive model by using a corresponding model result variable, so that a model result of the comprehensive model can reflect a function of each variable in each weak variable group. Therefore, considerations of risk assessment are more comprehensive, the interpretability and the model stability are stronger, and the model result is as objective as possible and is more robust in application, thereby helping improve the effect of risk assessment and helping reflect the future trend of service development.

Embodiment 2

To better implement the foregoing solution in the embodiment of the present invention, the following further provides a related apparatus used for cooperatively implementing the foregoing solution.

Referring to FIG. 4, this embodiment of the present invention provides a risk assessment system 400. The risk assessment system 400 may include:

a preprocessing module 410, configured to perform variable grouping according to data sources, to obtain at least one first-type variable group and at least one second-type variable group;

a first construction module 420, configured to construct a risk assessment model for the at least one second-type variable group, to obtain a model result of the risk assessment model for the at least one second-type variable group;

a variable combination module 430, configured to: use the model result of the at least one second-type variable group as a variable, and combine the variable with a variable in the at least one first-type variable group, to form a third-type variable group; and

a second construction module 440, configured to construct a comprehensive risk assessment model for the third-type variable group.

Optionally, the variable grouping according to data sources is performed according to correlations between the data sources and a target variable and/or correlations between the data sources and user information.

In some embodiments, the preprocessing module 410 includes:

a grouping unit 4101, configured to group all variables into a plurality of variable groups according to different data sources;

a calculation unit 4102, configured to: calculate a correlation coefficient of any variable and a target variable according to correlations between the data sources and the target variable, and calculate average correlation coefficients of the plurality of variable groups;

a determining unit 4103, configured to determine importance values of the plurality of variable groups according to correlations between the data sources and user information; and

a classification unit 4104, configured to: perform variable classification according to the average correlation coefficients and/or the importance values of the plurality of variable groups, classify a variable group whose average correlation coefficient is greater than a threshold and/or whose importance value is the highest as a strong variable group, that is, the first-type variable group, and classify other variable groups as weak variable groups, that is, second-type variable groups.

In some embodiments, the variable combination module 430 is specifically configured to: denote a model result of a risk assessment model for any variable group $X_j$ in the at least one second-type variable group as $Logodds_j$, use $Logodds_j$ as a variable, denote any variable in the at least one first-type variable group as $x_i$, and combine all $Logodds_j$ and $x_i$ to form the third-type variable group, both i and j being positive integers.

In some embodiments, the second construction module 440 is specifically configured to construct the following comprehensive risk assessment model for the third-type variable group:

$$Logodds = a_0 + \sum_{i=1}^{n} a_i x_i + \sum_{j=1}^{m} a_j Logodds_j$$

n being the number of variables $x_i$, m being the number of variables $Logodds_j$, $a_0$ being an intercept term/a constant term, $a_i$ representing a weight of the variable $x_i$, and $a_j$ representing a weight of the variable $Logodds_j$.

In some embodiments, the system 400 further includes a calculation module 450, configured to calculate a probability parameter Pr*obability* according to a model result *Logodds* of the second logic model:

$$\mathrm{Pr}obability = \exp(Logodds) \Big/ (1 + \exp(Logodds))$$

*Probability* representing a probability that the model result is impaired.

It can be understood that functions of various functional modules of the system in this embodiment of the present invention may be specifically implemented according to the method in the foregoing method embodiment, and for a specific implementation process thereof, refer to the related descriptions in the foregoing method embodiment. Details are not described herein again.

It can be learned from the foregoing that in some feasible implementations of the present disclosure, the risk assessment system is provided. The solution is used in which the variables are grouped and classified, to obtain the strong variable group and the weak variable group; the risk assessment model is constructed for each obtained weak variable group; the model result of each weak variable group is used as a variable to be combined with the obtained strong variable group, to form the combination variable group; and finally, the comprehensive risk assessment model is constructed for the combination variable group. The following technical effects are obtained:

The method fully digs and uses the data value of a weak variable group, and each variable in each weak variable group may be reflected in a finally constructed comprehensive model by using a corresponding model result variable, so that a model result of the comprehensive model can reflect a function of each variable in each weak variable group. Therefore, considerations of risk assessment are more comprehensive, the interpretability and the model stability are stronger, and the model result is as objective as possible and is more robust in application, thereby helping improve the effect of risk assessment and helping reflect the future trend of service development.

Embodiment 3

This embodiment of the present invention further provides a computer storage medium. The computer storage medium may store a program. When being executed by a computer device including a processor, the program enables the computer device to perform some or all steps in the risk assessment method in the foregoing method embodiment.

Embodiment 4

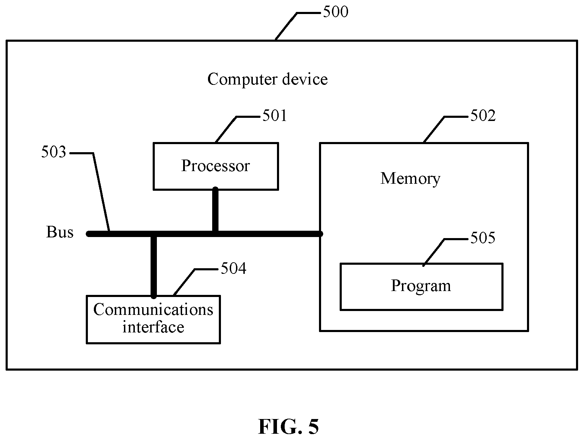

Referring to FIG. 5, this embodiment of the present invention further provides a computer device 500.
The computer device 500 includes a processor 501, a memory 502, a bus 503, and a communications interface 504. The memory 502 is configured to store a program 505. The program 505 includes a computer executable instruction. The processor 501 and the memory 502 are connected by using the bus 503. When the computer device 500 runs, the processor 501 executes the program 505 stored in the memory 502, so that the computer device 500 performs the risk assessment method in the foregoing method embodiment.
Specifically, the communications interface 504 may receive data. The received data includes all variables. The memory 502 may store the received variables. The processor 501 may perform the following steps by executing the program 505: performing variable grouping according to data sources, to obtain at least one first-type variable group and at least one second-type variable group; constructing a risk assessment model for the at least one second-type variable group, to obtain a model result of the risk assessment model for the at least one second-type variable group; using the model result of the at least one second-type variable group as a variable, and combining the variable with a variable (for example, all variables) in the at least one first-type variable group, to form a third-type variable group; and constructing a comprehensive risk assessment model for the third-type variable group.
The bus 503 may be an Industry Standard Architecture (ISA) bus, a peripheral component interconnect (PCI) bus, an Extended Industry Standard Architecture (EISA) bus, or the like. The bus may be classified into one or more of an address bus, a data bus, and a control bus. For convenience of representation, only one bold line is used for representation in FIG. 5, but it does not represent that there is only one bus or one type of bus.
The memory 502 may include a high-speed ramdom access memory (RAM) memory. Optionally, the memory 502 may further include a non-volatile memory. For example, the memory 502 may include a magnetic disk memory.
The processor 501 may be a central processing unit (CPU), or the processor 501 may be an application-specific integrated circuit (ASIC), or the processor 501 may be configured as one or more integrated circuits for implementing this embodiment of the present invention.
In the foregoing embodiments, descriptions of the embodiments have different emphases, and for parts that are not described in detail in one embodiment, refer to the related descriptions in the other embodiments.
The risk assessment method and system provided in the embodiments of the present invention are described above in detail. Although the principles and implementations of the present disclosure are described by using specific examples in this specification, the descriptions of the foregoing embodiments are merely intended to help understand the method and the core idea of the method of the present disclosure. Meanwhile, a person of ordinary skill in the art may make modifications to the specific implementations and application range according to the idea of the present disclosure. In conclusion, the content of this specification should not be construed as a limit on the present disclosure.

**Claims**

1. A risk assessment method, comprising:

    performing variable grouping according to data sources, to obtain at least one first-type variable group and at least one second-type variable group;
    constructing a risk assessment model for the at least one second-type variable group, to obtain a model result of the risk assessment model for the at least one second-type variable group;
    using the model result of the at least one second-type variable group as a variable, and combining the variable with a variable in the at least one first-type variable group, to form a third-type variable group; and
    constructing a comprehensive risk assessment model for the third-type variable group.

2. The risk assessment method according to claim 1, wherein the variable grouping according to data sources is performed according to correlations between the data sources and a target variable and/or correlations between the data sources and user information.

3. The risk assessment method according to claim 2, wherein a correlation between the at least one first-type variable group and the target variable is greater than a correlation between the at least one second-type variable group and the target variable and/or a correlation between the at least one first-type variable group and the user information is greater than a correlation between the at least one second-type variable group and the user information.

4. The risk assessment method according to claim 1, wherein the at least one second-type variable group comprises a plurality of second-type variable groups; and
before the constructing a comprehensive risk assessment model for the third-type variable group, the method comprises:
constructing a risk assessment model for each of the second-type variable groups, to obtain a model result of the risk assessment model for each second-type variable group; and using the model result of each second-type variable group as a variable, and combining the variable with all variables in the at least one first-type variable group, to form the third-type variable group.

5. The method according to claim 1, wherein the performing variable grouping according to data sources, to obtain at least one first-type variable group and at least one second-type variable group comprises:

grouping all variables into a plurality of variable groups according to different data sources;
calculating a correlation coefficient of any variable and a target variable according to correlations between the data sources and the target variable, and calculating an average correlation coefficient of each variable group in the plurality of variable groups;
determining an importance value of each variable group in the plurality of variable groups according to correlations between the data sources and user information; and
performing variable group classification according to the average correlation coefficients and/or the importance values of the plurality of variable groups, classifying a variable group whose average correlation coefficient is greater than a threshold and/or whose importance value is the highest as a first-type variable group, and classifying other variable groups as second-type variable groups.

6. The method according to any one of claims 1 to 3 and 5, wherein the using the model result of the at least one second-type variable group as a variable, and combining the variable with a variable in the at least one first-type variable group, to form a third-type variable group comprises:
denoting a model result of a risk assessment model for any variable group $X_j$ in the at least one second-type variable group as $Logodds_j$, using $Logodds_j$ as a variable, denoting any variable in the at least one first-type variable group as $x_i$, and combining all $Logodds_j$ and $x_i$ to form the third-type variable group, both i and j being positive integers.

7. The method according to claim 6, wherein the constructing a comprehensive risk assessment model for the third-type variable group comprises:

constructing the following comprehensive risk assessment model for the third-type variable group:

$$Logodds = a_0 + \sum_{i=1}^{n} a_i x_i + \sum_{j=1}^{m} a_j Logodds_j$$

n being the number of variables $x_i$, m being the number of variables $Logodds_j$, $a_0$ being an intercept term/a constant term, $a_i$ representing a weight of the variable $x_i$, and $a_j$ representing a weight of the variable $Logodds_j$.

8. The method according to claim 7, further comprising:

calculating a probability parameter Pr*obability* according to a model result *Logodds* of the comprehensive risk assessment model:

$$\mathrm{Pr}\,obability = \exp(Logodds) \Big/ (1 + \exp(Logodds))$$

*Probability* representing a probability that the model result of the comprehensive risk assessment model is impaired.

9. A risk assessment system, comprising:

a preprocessing module, configured to perform variable grouping according to data sources, to obtain at least one first-type variable group and at least one second-type variable group;
a first construction module, configured to construct a risk assessment model for the at least one second-type variable group, to obtain a model result of the risk assessment model for the at least one second-type variable group;
a variable combination module, configured to: use the model result of the at least one second-type variable group as a variable, and combine the variable with a variable in the at least one first-type variable group, to form a third-type variable group; and
a second construction module, configured to construct a comprehensive risk assessment model for the third-type variable group.

10. The system according to claim 9, wherein the preprocessing module comprises:

a grouping unit, configured to group all variables into a plurality of variable groups according to different data sources;
a calculation unit, configured to: calculate a correlation coefficient of any variable and a target variable according to correlations between the data sources and the target variable, and calculate average correlation coefficients of the plurality of variable groups;
a determining unit, configured to determine importance values of the plurality of variable groups according to correlations between the data sources and user information; and
a classification unit, configured to: perform variable classification according to the average correlation coefficients and/or the importance values of the plurality of variable groups, classify a variable group whose average correlation coefficient is greater than a threshold and/or whose importance value is the highest as a first-type variable group, and classify other variable groups as second-type variable groups.

11. The system according to claim 9 or 10, wherein
the variable combination module is configured to: denote a model result of a risk assessment model for any variable group $X_j$ in the at least one second-type variable group as $Logodds_j$, use $Logodds_j$ as a variable, denote any variable in the at least one first-type variable group as $x_i$, and combine all $Logodds_j$ and $x_j$ to form the third-type variable group, both i and j being positive integers.

12. The system according to claim 11, wherein
the second construction module is configured to construct the following comprehensive risk assessment model for the third-type variable group:

$$Logodds = a_0 + \sum_{i=1}^{n} a_i x_i + \sum_{j=1}^{m} a_j Logodds_j$$

n being the number of variables $x_i$, m being the number of variables $Logodds$ , $a_0$ being an intercept term/a constant term, $a_i$ representing a weight of the variable $x_i$, and $a_j$ representing a weight of the variable $Logodds_j$.

13. The system according to claim 12, further comprising:

a calculation module, configured to calculate a probability parameter P*robability* according to a model result *Logodds* of the second logic model:

$$Pr\,obability = \frac{\exp(Logodds)}{(1 + \exp(Logodds))}$$

*Probability* representing a probability that the model result is impaired.

Perform variable grouping according to data sources, to obtain at least one first-type variable group and at least one second-type variable group —— 110

Construct a risk assessment model for the at least one second-type variable group, to obtain a model result of the risk assessment model for the at least one second-type variable group —— 120

Use the model result of the at least one second-type variable group as a variable, and combine the variable with a variable in the at least one first-type variable group, to form a third-type variable group; and construct a comprehensive risk assessment model for the third-type variable group —— 130

**FIG. 1**

Storage server → Raw data → Data preparation and cleansing → Variable derivation

Model result ← Construct a logistic regression model ← Variable analysis and screening ← Modeling wide table

**FIG. 2**

**FIG. 3**

**FIG. 4**

**FIG. 5**

# INTERNATIONAL SEARCH REPORT

| International application No. |
| --- |
| **PCT/CN2017/071920** |

## A.  CLASSIFICATION OF SUBJECT MATTER

G06F 19/00 (2011.01) i; G06Q 40/00 (2012.01) i

According to International Patent Classification (IPC) or to both national classification and IPC

## B.  FIELDS SEARCHED

Minimum documentation searched (classification system followed by classification symbols)

G06F; G06Q

Documentation searched other than minimum documentation to the extent that such documents are included in the fields searched

Electronic data base consulted during the international search (name of data base and, where practicable, search terms used)

USTXT; EPTXT; CNTXT; CNABS; WOTXT; CJFD: risk, assessment, evaluation, exposure, rating, model, grouping, divide, groups, classify, variate, variable, combination, assembly, merge, combine

## C.  DOCUMENTS CONSIDERED TO BE RELEVANT

| Category* | Citation of document, with indication, where appropriate, of the relevant passages | Relevant to claim No. |
| --- | --- | --- |
| A | CN 105243474 A (ZHEJIANG ACADEMY OF SAFETY SCIENCE AND TECHNOLOGY), 13 January 2016 (13.01.2016), the whole document | 1-13 |
| A | CN 102117469 A (INDUSTRIAL AND COMMERCIAL BANK OF CHINA LIMITED), 06 July 2011 (06.07.2011), the whole document | 1-13 |
| A | US 2004249678 A1 (HENDERSON, E.D.), 09 December 2004 (09.12.2004), the whole document | 1-13 |
| A | WO 2011057217 A2 (UNIVERSITY OF UTAH RESEARCH FOUNDATION et al.), 12 May 2011 (12.05.2011), the whole document | 1-13 |

☐ Further documents are listed in the continuation of Box C.       ☒ See patent family annex.

| \* Special categories of cited documents: | "T" later document published after the international filing date or priority date and not in conflict with the application but cited to understand the principle or theory underlying the invention |
| --- | --- |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 08 April 2017 (08.04.2017) | **21 April 2017 (21.04.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHAO, Weihua** Telephone No.: (86-10) **62411830** |
| --- | --- |

Form PCT/ISA/210 (second sheet) (July 2009)

## INTERNATIONAL SEARCH REPORT
### Information on patent family members

| | International application No. |
|---|---|
| | **PCT/CN2017/071920** |

| Patent Documents referred in the Report | Publication Date | Patent Family | Publication Date |
|---|---|---|---|
| CN 105243474 A | 13 January 2016 | None | |
| CN 102117469 A | 06 July 2011 | None | |
| US 2004249678 A1 | 09 December 2004 | None | |
| WO 2011057217 A2 | 27 October 2011 | US 2013046562 A1 | 21 February 2013 |
| | | WO 2011057217 A2 | 12 May 2011 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610070616